# EUROPÄISCHE PATENTSCHRIFT

(11) **EP 1 950 117 B1**
(45) Veröffentlichungstag und Bekanntmachung des Hinweises auf die Patenterteilung: **20.03.2013**
(21) Anmeldenummer: 08100919.3
(22) Anmeldetag: 25.01.2008
(51) Int. Cl.: B61C 3/02

(54) **Zugverband für einen Schnellzug**
Train set for a fast train
Rame pour train rapide

(30) Priorität: 26.01.2007 RU 2007103118 U
(43) Veröffentlichungstag der Anmeldung: 30.07.2008
(73) Patentinhaber: Siemens Aktiengesellschaft, 80333 München (DE); Offene Aktiengesellschaft "Russische Eisenbahnen", 107144 Moskau (RU)
(72) Erfinder: Lipp, Andreas, 91056, Erlangen (DE); Gapanovich, Valentin Aleksandrovich, 121609, Moskau (RU); Yagovkin, Andrej Nikolaevich, 140121, Ramenskij Rajon, llinskij (RU); Andreev, Vladimir Evgenevich, 196066, St. Petersburg (RU); Nazarov, Aleksander Stanislavovich, 129277, Moskau (RU); Nazarov, Oleg Nikolaevich, 115612, Moskau (RU)
(74) Vertreter: Glawe, Delfs, Moll

(56) Entgegenhaltungen:
- EP-A- 1 052 136
- EP-A- 1 126 573
- DE-A1- 19 819 094
- KURZ H: "ICE3 TEST TRAIN ROLLS THIS SUMMER" RAILWAY GAZETTE INTERNATIONAL, REED BUSINESS INFORMATION, LONDON, GB, Bd. 153, Nr. 6, 1. Juni 1997 (1997-06-01), Seiten 373-376, XP000689173 ISSN: 0373-5346

## Beschreibung

Die Erfindung bezieht sich auf einen Zugverband für einen Schnellzug auf dem Gebiet des Eisenbahntransportswesens und ist insbesondere für die Ausstattung einer Traktionseinheit bestimmt, die für Personenbeförderungen auf Schnellstrecken mit einer Spurbreite von 1520 mm in Gleichstromnetzen verwendet werden kann.

Die Konfiguration eines Schnellzuges ist bekannt und umfaßt zwei Kopffahrgastwagen mit Traktionsumrichter und Führerraum, die sich am Kopf und am Ende des Zuges befinden, Fahrgastwagen mit Trafos, von denen jeder mit einem Fahrgastwagen mit Stromrichter verbunden ist, sowie einen Fahrgastwagen ("Eisenbahnen der Welt", Nr. 12, 1997, Seiten 3-17 und "ICE3 test train rolls this summer", Railway Gazette International, Bd. 153, Nr. 6, 1. Juni 1997, Seiten 373-376).

Bei bekannter Lösung entstehen jedoch im Steuervorgang von Traktionsstromrichtern elektromagnetische Störungen, die die Funktion eines automatischen Eisenbahnsystems behindern. Als Ergebnis sind unberechtigte Weichen- und Lichtsignalumstellungen usw. möglich, infolge dessen die Fahrtsicherheit bedroht wird.

Außerdem können bei Ausfall eines der Stromabnehmer im Zugverband bei Weiterfahrt mit dem verbleibenden Stromabnehmer die vorgegebenen Geschwindigkeits- und andere Parameter nicht eingehalten werden.

Der Erfindung liegt als Aufgabe die Erhöhung der Betriebseigenschaften, wie die Fahrtsicherheit und die Sicherstellung der Betriebskenndaten, zugrunde.

Die erwähnte Aufgabe wird gelöst durch einen Zugverband, der zwei identische Traktionseinheiten aufweist, von denen jede jeweils einen Kopffahrgastwagen mit Traktionsumrichtern und einem Führerraum, einen Drosselwagen mit Stromabnehmer, einen Mittelfahrgastwagen mit Traktionsumrichtern sowie einen Fahrgastwagen mit Batterien aufweist, wobei der Drosselwagen mit Netzfiltern ausgestattet ist.

Die Netzfilter sichern eine einwandfreie Funktion der Systeme der Eisenbahnautomatik.

Bevorzugt ist der Drosselwagen mit einem Reservestromabnehmer ausgestattet. Der zusätzliche Stromabnehmer sichert die vorgegebenen Betriebskenndaten des Fahrzeuges bei eventuellem Ausfall des Hauptstromabnehmers.

Zur Erhöhung einer maximal zu befördernden Personenanzahl kann vorgesehen sein, dass sich in jeder Traktionseinheit zwischen dem Drosselwagen und dem Mittelwagen mit Traktionsumrichtern zusätzlich ein Fahrgastwagen befindet.

Zur Versorgung von Traktionsmotoren ist es günstig, wenn jeder Kopfwagen und jeder Drosselwagen jeweils mit Traktionscontainern ausgestattet ist, welche mit einem DC-Hauptschalter verbunden sind, die in einem Untertourbereich des Drosselwagens angeordnet ist. Beispielsweise kann jeder Traktionscontainer jeweils vier Traktionsmotoren versorgen.

Günstiger Weise sind die Traktionscontainer jeweils in einem Unterflurbereich der Kopfwagen unmittelbar angeordnet. Die Traktionscontainer können außerdem mit einem Bremswiderstand verbunden sein, der auf einem Dach oder im Unterflurbereich des Schienenfahrzeugs angeordnet ist.

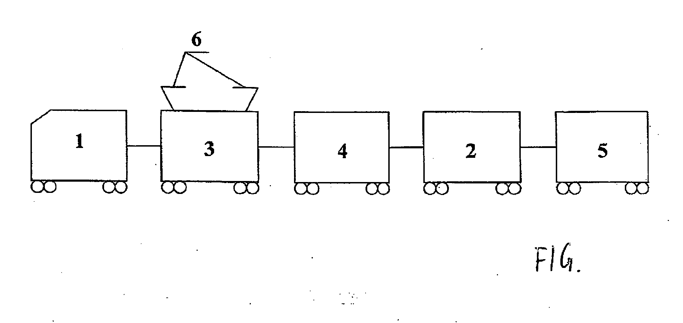

Ein Ausführungsbeispiel der Erfindung wird nachfolgend anhand der Zeichnung noch näher beschrieben. Die einzige Figur zeigt eine schematische Seitenansicht einer Traktionseinheit eines Schnellzuges.

Der Schnellzug besteht aus zwei identischen Traktionseinheiten, von denen jede fünf Fahrgastwagen 1, 2, 3, 4, 5 mit verschiedener Ausrüstung und Funktionen aufweist und einen Halbzug bildet.

Jede Traktionseinheit weist zwei Wagen 1, 2 mit Stromrichtern, die die Steuerung von Traktionsmotoren sicherstellen (nicht dargestellt). Einer von diesen Wagen (Wagen 1) ist ein Kopfwagen, und der andere Wagen (Wagen 2) ist ein Mittelwagen. Im Kopfwagen 1 befindet sich der Führerraum.

Zwischen den Wagen 1 und 2 sind ein Drosselwagen 3 mit zwei Stromabnehmern 6 und Netzfiltern (nicht dargestellt) und ein Fahrgastwagen 4 untergebracht. Darüber hinaus umfasst die Traktionseinheit einen Fahrgastwagen 5 mit Batterie (nicht dargestellt).

Der Schnellzug wird aus zwei Traktionseinheiten durch Kupplung der Fahrgastwagen 5 mit Batterie gebildet.

Bei der Speisung des Triebzuges wird die Energie durch einen der DC-Stromabnehmer 6, der auf dem Dach des Drosselwagens 3 untergebracht ist, und einen im Unterflurbereich des Drosselwagens 3 mit Netzfiltern untergebrachten DC-Hauptschalter (nicht dargestellt), zu Traktionscontainern (nicht dargestellt) weitergeleitet, die sich im Unterflurbereich der Wagen 1 und 2 mit Stromrichtern befinden.

Einer der Stromabnehmer 6 einer Traktionseinheit ist während der Fahrt des Triebzuges ein Reservestromabnehmer und wird beim Ausfall des zweiten Stromabnehmers 6 in Betrieb gesetzt.

Jeder der beiden Traktionscontainer versorgt je vier Traktionsmotoren (bedingt nicht dargestellt). Somit sind die Achsen der Wagen 1 und 2 Triebachsen.

Jeder Traktionscontainer ist mit einem Bremswiderstand (nicht dargestellt) verbunden, der auf dem Dach oder im Unterflurbereich eingebaut ist.

Das Vorhandensein von Netzfiltern trägt dazu bei, eine Minderung der elektromagnetischen Störungen in den Starkstromkreisen zu erreichen und schließt seine unberechtigte Auswirkung auf ein Meldungs-, Sperrsystem u.a. aus.

## Patentansprüche

1. Zugverband für einen Schnellzug, der zwei identische Traktionseinheiten aufweist, von denen jede einen Kopfwagen (1) mit Traktionsumrichtern und einem Führerraum, einen Drosselwagen (3) mit einem Stromabnehmer (6), einen angetriebenen Mittelwagen (2) mit Traktionsumrichtern und einen Fahrgastwagen (5) mit Batterien aufweist, **dadurch gekennzeichnet, dass** der Drosselwagen (3) mit Netzfiltern ausgestattet ist.

2. Zugverband nach Anspruch 1,
**dadurch gekennzeichnet, dass**
der Drosselwagen (3) mit einem Reservestromabnehmer ausgestattet ist.

3. Zugverband nach einem der Ansprüche 1 oder 2,
**dadurch gekennzeichnet, dass**
sich in jeder Traktionseinheit zwischen dem Drosselwagen (3) und dem Mittelwagen (2) mit Traktionsumrichtern zusätzlich ein Fahrgastwagen (4) befindet.

4. Zugverband nach einem der Ansprüche 1 bis 3,
**dadurch gekennzeichnet, dass**
jeder Kopfwagen (1) und jeder Drosselwagen (3) jeweils mit Traktionscontainern ausgestattet sind, welche mit einem DC-Hauptschalter verbunden sind, der in einem Unterflurbereich des Drosselwagens (3) angeordnet ist.

5. Zugverband nach Anspruch 4,
**dadurch gekennzeichnet, dass**
jeder der Traktionscontainer jeweils vier Traktionsmotoren versorgt.

6. Zugverband nach einem der Ansprüche 4 oder 5,
**dadurch gekennzeichnet, dass**
die Traktionscontainer jeweils in einem Unterflurbereich der Kopfwagen (1) und Mittelwagen (2) angeordnet sind.

7. Zugverband nach einem der Ansprüche 4 bis 6,
**dadurch gekennzeichnet, dass**
jeder Traktionscontainer mit einem Bremswiderstand verbunden ist, der auf einem Dach oder im Unterflurbereich angeordnet ist.

## Claims

1. Train unit for an express train, which has two identical traction units each of which has a head carriage (1) with traction converters and a driver compartment, an inductor carriage (3) with a current collector (6), a driven centre carriage (2) with traction converters and a passenger carriage (5) with batteries, **characterized in that** the inductor carriage (3) is equipped with mains filters.

2. Train unit according to Claim 1,
**characterized in that**
the inductor carriage (3) is equipped with a spare current collector.

3. Train unit according to either of Claims 1 and 2, **characterized in that**
a passenger carriage (4) is additionally located between the inductor carriage (3) and the centre carriage (2) with traction converters, in each traction unit.

4. Train unit according to one of Claims 1 to 3, **characterized in that**
each head carriage (1) and each inductor carriage (3) are in each case equipped with traction containers which are connected to a DC main switch, which is arranged in an underfloor area of the inductor carriage (3).

5. Train unit according to Claim 4,
**characterized in that**
each of the traction containers in each case supplies four traction motors.

6. Train unit according to one of Claims 4 or 5, **characterized in that**
the traction containers are each arranged in an underfloor area of the head carriages (1) and centre carriages (2).

7. Train unit according to one of Claims 4 to 6, **characterized in that**
each traction container is connected to a braking resistor, which is arranged on a roof or in the underfloor area.

## Revendications

1. Convoi de train pour un train rapide, qui a deux unités de traction identiques, dont chacune a une voiture ( 1 ) de tête ayant des convertisseurs de traction et une cabine de conducteur, une voiture ( 3 ) de commande ayant un pantographe ( 6 ), une voiture ( 2 ) médiane entraînée ayant des convertisseurs de traction et une voiture ( 5 ) de passagers ayant des batteries, **caractérisé en ce que** la voiture ( 3 ) de commande est équipée de filtres de réseau.

2. Convoi de train suivant la revendication 1,
**caractérisé en ce que**
la voiture ( 3 ) de commande est équipée d'un pantographe de réserve.

3. Convoi suivant l'une des revendications 1 ou 2,
**caractérisé en ce que**
une voiture ( 4 ) de passagers se trouve supplémentairement dans chaque unité de traction entre la voiture ( 3 ) de commande et la voiture ( 2 ) médiane ayant des convertisseurs de traction.

4. Convoi suivant l'une des revendications 1 à 3,
**caractérisé en ce que**
chaque voiture ( 1 ) de tête et chaque voiture ( 3 ) de commande sont équipées respectivement de conteneurs de traction, qui sont reliés à un commutateur principal en courant continu, lequel est monté dans une partie sous plancher de la voiture ( 3 ) de commande.

5. Convoi de train suivant la revendication 4,
**caractérisé en ce que**
chaque conteneur de traction alimente respectivement quatre moteurs de traction.

6. Convoi suivant l'une des revendications 4 ou 5,
**caractérisé en ce que**
les conteneurs de traction sont disposés respectivement dans une partie sous plancher de la voiture ( 1 ) de tête et de la voiture ( 2 ) médiane.

7. Convoi suivant l'une des revendications 4 à 6,
**caractérisé en ce que**
chaque conteneur de traction est relié à une résistance de freinage, qui est montée sur un toit ou dans une partie sous plancher.
